# EUROPEAN PATENT APPLICATION

(11) **EP 4 581 999 A1**
(43) Date of publication of application: **09.07.2025**
(21) Application number: 24200695.5
(22) Date of filing: 17.09.2024
(51) Int. Cl.: A47L 15/00, A47L 15/44

(54) **CUP WASHER**

(30) Priority: 04.01.2024 KR 20240001378; 29.07.2024 KR 20240100197
(71) Applicant: LG Electronics Inc., Yeongdeungpo-gu Seoul 07336 (KR)
(72) Inventor: KIM, Miseong, 08592 Seoul (KR); CHO, Kichul, 08592 Seoul (KR); JUNG, Taeyong, 08592 Seoul (KR); OH, Sejae, 08592 Seoul (KR); JIN, Jaewoo, 08592 Seoul (KR)
(74) Representative: Vossius & Partner Patentanwälte Rechtsanwälte mbB

(57) **Abstract**

Disclosed is a cup washer. The cup washer of the present disclosure includes an additive storage part and an additive supply part. The additive storage part is configured to store an additive in a storage space. The additive supply part is configured to supply the additive into the tub. The additive supply part includes a rotary plate and a piston The rotary plate is rotated by an additive motor. The rotary plate provides an eccentric shaft. The piston is connected to the eccentric shaft by a connecting rod The piston reciprocates within a cylinder to suction and discharge the additive from the additive storage part

## Description

### CROSS-REFERENCE TO RELATED APPLICATION(S)

This application is based on and claims priority under 35 U.S.C. 119 to Korean Patent Application Nos. 10-2024-0001378 and 10-2024-0100197, filed on January 04 and July 29, 2024, in the Korean Intellectual Property Office, the disclosures of which are herein incorporated by reference in their entireties.

### BACKGROUND OF THE INVENTION

### 1. Field of the invention

The present disclosure relates to a cup washer, and more specifically, to a cup washer that washes a cup by spraying water.

### 2. Description of the Prior Art

A cup washer is a device that washes a cup by spraying water. Recently, as the awareness of practicing carbon neutrality has expanded throughout society, the number of people carrying personal or reusable cups has increased Accordingly, the number of government offices, companies, and stores where cup washers are installed for the hygiene and convenience of users (employees) is increasing.

Korean Patent No. 1474433 (hereinafter referred to as "Prior Document 1") discloses a "cleaning material feeder for washer", in which the detergent feeder for a washer includes a detergent container and a detergent container cover.

The detergent container is provided with a detergent storage part and a detergent supply part. The detergent supply part guides the detergent stored in the detergent storage part to the washer body. The detergent container is inserted into the detergent container storage part provided in the washer body. The detergent container cover selectively opens and closes the detergent storage part of the detergent container. The detergent stored in the detergent storage part is supplied into the tub together with water by the water feeder and the detergent feeder.

According to Prior Document 1 above, all of the detergent stored in the detergent storage part is supplied into the tub together with water. Therefore, a user should directly measure the amount of detergent to be supplied into the tub and supply it into the detergent storage part.

In relation to the technology of supplying detergent, Korean Patent No. 830487 (hereinafter referred to as "Prior Document 2") discloses a "device for providing detergent in a washing machine". The detergent providing device for a drum washing machine includes a detergent container, a detergent container insertion portion, a detergent container housing, an upper cover, a dispenser, and a water supply valve.

The detergent container has a plurality of detergent supply regions separated and partitioned so as to accommodate various detergents, and an inlet hole and an outlet hole through which washing water can flow in and out The bottom surface of the detergent container housing includes a detergent supply part connected to a water supply hose to supply a mixture of washing water and detergent into the inside of the tub. The water supply dispenser is provided with a plurality of water supply holes to supply washing water to each detergent supply region of the detergent container. The water supply valve is turned on/offunder the control of a controller, and controls water supply from an external water supply source to the water supply dispenser.

According to Prior Document 2 above, the detergent in the detergent container is automatically supplied into the tub, but a user should directly measure the amount of detergent to be supplied into the tub and supply it into each detergent supply region of the detergent container. Therefore, even if the amount of laundry is small, the corresponding small amount of detergent cannot be automatically supplied into the tub. In addition, there is a limit to precisely control the amount of detergent supplied into the tub depending on the amount or type of laundry.

### SUMMARY OF THE INVENTION

The present disclosure was made to solve the above-described problems of a cup washer that washes a cup by spraying water.

Specifically, the present disclosure provides a cup washer capable of automatically supplying a precise and small amount of additive into the tub by optimizing an additive supply structure.

In addition, the present disclosure provides a cup washer capable of precisely controlling the pumped amount of additive supplied into the tub by accurately controlling the position of a piston.

Furthermore, the present disclosure provides a cup washer capable of precisely detecting restrictions and changes in operation time of a piston caused by external factors.

The technical problems to be addressed by the present disclosure are not limited to those described above, and other technical problems, which are not described above, will be clearly understood by a person ordinarily skilled in the related art to which the present disclosure belongs.

The present application discloses a cap washer that washes cups by spraying water into a tub. The cup washer may include an additive storage part and an additive supply part

The additive storage part may store an additive in the storage space.

The additive supply part may supply the additive into a tub. The additive supply part may include a rotary plate and a piston.

The rotary plate may be rotated by an additive motor. The rotary plate may provide an eccentric shaft.

The piston may be connected to the eccentric shaft by a connecting rod. The piston may reciprocate within a cylinder to suck and discharge the additive from the additive storage part

The additive supply part may include a magnetic force member and a magnetic force detector.

The magnetic force member may be coupled to the rotary plate.

The magnetic force detector may be provided on one side of the rotation path of the magnetic force member to detect the rotation of the rotary plate.

The cup washer disclosed herein may control the input amount of additive in response to a signal from the magnetic force detector.

The magnetic force member may be a permanent magnet and form the maximum magnetic flux in the radial direction of the rotary plate on one surface of the rotary plate.

The magnetic force detector may be a Hall sensor and detect the magnetic field of the magnetic force member.

The additive supply part may include a pump housing and an additive transfer pipe.

The pump housing may provide a suction space where the additive from the additive storage part is suctioned during the reciprocating motion of the piston.

The additive transfer pipe may connect the pump housing and the tub so that the additive discharged from the suction space moves to the tub.

The suction space may be disposed below the storage space and above the additive transfer pipe.

The piston may reciprocate up and down within the cylinder.

The suction space and the upper space within the cylinder may be connected to each other above the top dead center of the piston

The additive supply part may include a first check valve and a second check valve.

The first check valve may open the inlet of the suction space by a pressure drop in the suction space during the reciprocating motion of the piston

The second check valve may be disposed below the first check valve. The second check valve may open the outlet of the suction space by a pressure increase in the suction space during the reciprocating motion of the piston

The first check valve may include an inlet plug, an inlet elastic member, and an inlet guide bar.

The inlet plug may be provided in the suction space. The inlet elastic member may be provided in the suction space.

The inlet elastic member may push the inlet plug to the inlet of the suction space.

The inlet guide bar may extend from the inlet plug. The inlet guide bar may be inserted into the inlet of the suction space.

The pump housing may provide a connecting space connecting the outlet of the suction space and the inlet of the additive transfer pipe.

The second check valve may include an outlet plug, an outlet elastic member, and an outlet guide bar.

The outlet plug may be provided in the connecting space.

The outlet elastic member may be provided in the connecting space. The outlet elastic member may push the outlet plug to the outlet of the suction space.

The outlet guide bar may extend from the outlet plug. The outlet guide bar may be inserted into the outlet of the suction space.

The connecting space may be disposed below the suction space and above the additive transfer pipe.

The above pump housing may include an additive supply pipe through which the additive discharged from the connecting space moves.

The inlet of the additive transfer pipe may be connected while surrounding the outer surface of the additive supply pipe.

The additive supply part may include a third check valve. The third check valve may open the outlet of the additive transfer pipe by a pressure increase inside the additive transfer pipe during the reciprocating motion of the piston

The additive supply part may supply the additive into the tub through an additive inlet provided in the first region of the inner wall of the tub.

The cup washer described herein may include a washing water supply part configured to supply water to the first region.

The washing water supply part may discharge water from the washing water inlet on the inner wall of the tub. The washing water inlet may be located above the additive inlet within the first region

The additive storage part may include a first additive storage part and a second additive storage part.

The first additive storage part may store a first additive in a first storage space.

The second additive storage part may store a second additive in a second storage space.

The additive supply part may include a first additive supply part and a second additive supply part

The first additive supply part may supply the first additive into the tub.

The second additive supply part may supply the second additive into the tub.

The cup washer described herein may include a controller configured to individually control the first additive supply part and the second additive supply part

The first additive supply part may be configured to supply the additive into the tub through a first additive inlet formed in the first region of the inner wall of the tub.

The second additive supply part may be configured to supply the additive into the tub through the second additive inlet formed in the first region.

In the cup washer of the embodiments of the present disclosure, the eccentric shaft connected to the piston by the connecting rod may be disposed such that its center is close to the center axis of the rotary plate. Therefore, the distance from the top dead point to the bottom dead point of the reciprocating motion of the piston can be shortened Therefore, the stroke volume (the product of the cross-sectional area and the stroke of the piston) of the additive pump can be reduced Therefore, the discharge amount per cycle of the additive pump can be small. Therefore, the pumped amount of additive supplied to the inside of the tub can be finely adjusted

In the cup washer according to an embodiment of the present disclosure, the magnetic force member may be coupled to one surface of the rotary plate and rotate along the circumferential direction of the rotary plate. The magnetic force member may form the maximum magnetic flux in the radial direction of the rotary plate on one surface of the rotary plate. In addition, the magnetic force detector may be a Hall sensor and detect a magnetic field of the magnetic force member. The controller may control the input amount of additive in response to a signal from the magnetic detector. Therefore, the controller can precisely control the amount of the additive supplied into the tub. In addition, the accuracy of the pumped amount of the additive can be increased by precisely controlling the position of the piston. Therefore, the variations of the pumped amount of the additive caused due to a change in the operating speed of the piston by external factors can be minimized In addition, the restrictions of the piston due to external factors can be identified through the position detection of the Hall sensor.

In the cup washer according to an embodiment of the present disclosure, the first check valve may open the inlet of the suction space by a pressure drop in the suction space during the reciprocating motion of the piston. The second check valve may be disposed below the first check valve and open the outlet of the suction space by a pressure increase in the suction space during the reciprocating motion of the piston. The third check valve may be provided on the outlet side of the additive transfer pipe. The third check valve may open the outlet of the additive transfer pipe by a pressure increase inside the additive transfer pipe during the reciprocating motion of the piston Therefore, when the rotary plate is not rotating, the third check valve can close the outlet of the additive transfer pipe. Therefore, the amount of additive supplied to the inside of the tub can be precisely controlled

In the cup washer according to an embodiment of the present disclosure, the first check valve may include an inlet plug, an inlet elastic member, and an inlet guide bar. The inlet guide bar may extend upward from the inlet plug. The inlet guide bar may be inserted into the inlet of the suction space by a certain length. Therefore, even when the inlet elastic member is compressed, the inlet guide bar can maintain the state of being partially inserted into the inlet of the suction space. Therefore, when the inlet elastic member recovers elasticity, the inlet guide bar can guide the inlet plug toward the inlet of the suction space. Therefore, the first check valve can accurately open and close the inlet of the suction space during the reciprocating motion of the piston.

In the cup washer according to an embodiment of the present disclosure, the second check valve may include an outlet plug, an outlet elastic member, and an outlet guide bar. The outlet guide bar may extend upward from the outlet plug. The outlet guide bar may be inserted into the outlet of the suction space by a predetermined length Therefore, even when the outlet elastic member is compressed, the outlet guide bar can maintain the state of being partially inserted into the outlet of the suction space. Therefore, when the outlet elastic member recovers elasticity, the outlet guide bar can guide the outlet plug toward the outlet of the suction space. Therefore, the second check valve can accurately open and close the outlet of the suction space during the reciprocating motion of the piston

In the cup washer according to an embodiment of the present disclosure, the suction space may be disposed below the storage space. Therefore, all of the additive in the storage space can flow into the suction space through the inlet of the suction space by gravity. The connecting space may be disposed below the suction space. Therefore, all of the additive in the suction space can flow into the connecting space through the outlet of the suction space by gravity. The additive transfer pipe may be disposed below the connecting space. Therefore, all of the additive in the connecting space can flow into the outlet of the additive transfer pipe by gravity. Therefore, all of the additive stored in the storage space can be discharged into the inside of the tub.

### BRIEF DESCRIPTION OF THE DRAWINGS

The above and other aspects, features and advantages of the present disclosure will be more apparent from the following detailed description taken in conjunction with the accompanying drawings, in which
FIG. 1 is a perspective view of the cup washer according to an embodiment of the present disclosure viewed from a front upper side;
FIG. 2 is a perspective view of the cup washer of FIG. 1 viewed from a rear upper side;
FIG. is a perspective view of the cup washer of FIG. 1 in the state in which a front panel is removed;
FIG. 4 is a partial perspective view of the cup washer of FIG. 1, illustrating the state in which a door is opened;
FIG. 5 is a side view of the cup washer of FIG. 1 in which a frame, a panel, a door, and a display unit are not illustrated;
FIG. 6 is a partial cross-sectional view of the cup washer of FIG. 5 in which a cup and a cup lid mounted on a rack are illustrated with imaginary lines;
FIG. 7 is a schematic view of a cup washer according to an embodiment of the present disclosure,
FIG. 8 is a partial perspective view of the cup washer of FIG. 1, illustrating the state in which a storage unit cover is opened;
FIG. 9 is a partial rear view of the cup washer of FIG. 5, illustrating a tub, an additive storage part, and an additive supply part;
FIG. 10 is a perspective view illustrating the additive storage part and the additive supply part of FIG. 9;
FIG. 11 is a side view illustrating the additive storage part and the additive supply part of FIG. 10;
FIG. 12 is a side view illustrating the additive pump of FIG. 10;
FIG. 13 is a view illustrating the additive pump of FIG. 12, in which the illustration of the cover housing is omitted;
FIG. 14 is a cross-sectional view taken along line A-A' inFIG. 12, illustrating the state in which the piston that reciprocates up and down is located at the bottom dead center,
FIG. 15 is a cross-sectional view taken along line A-A' in FIG. 12, illustrating the state in which the piston that reciprocates up and down is located at the top dead center is illustrated;
FIG. 16 is a partial cross-sectional view of the cup washer of FIG. 9, illustrating the additive pump as a cross-section taken along line B-B' in FIG. 12, in the state in which the piston that reciprocates up and down is located at the bottom dead center,
FIG. 17 is a partial cross-sectional view of the cup washer of FIG. 9, illustrating the additive pump as a cross-section taken along line B-B' in FIG. 12, in the state in which the piston that reciprocates up and down is located at the top dead center, and
FIG. 18 is a view of a washing space inside the tub of FIG. 6 viewed from a front upper side.

### DETAILED DESCRIPTION OF THE EXEMPLARY EMBODIMENTS

Hereinafter, embodiments of the present disclosure will be described in detail with reference to the accompanying drawings However, in the following description of the present disclosure, descriptions of already well-known functions or constructions will be omitted in order to make the gist of the present disclosure clear.

The X direction, Y direction, and Z direction to be described in embodiments of the present disclosure may be orthogonal to each other. Each of the X and Y directions may be parallel to the horizontal direction, and the Z direction may be parallel to the vertical direction. When the X direction is parallel to the left-right direction, the Y direction may be parallel to the front-rear direction. When the X direction is parallel to the front-rear direction, the Y direction may be parallel to the left right direction.

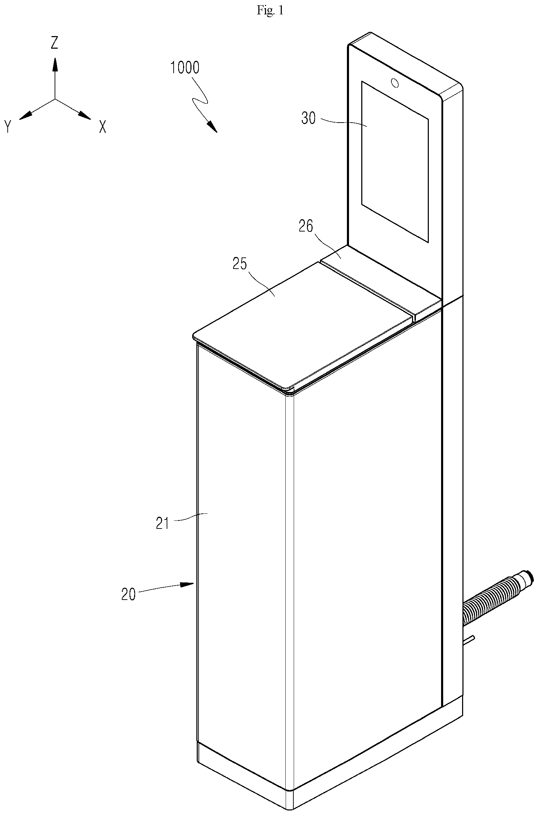

FIG. 1 is a perspective view of the cup washer 1000 according to an embodiment of the present disclosure viewed from a front upper side.

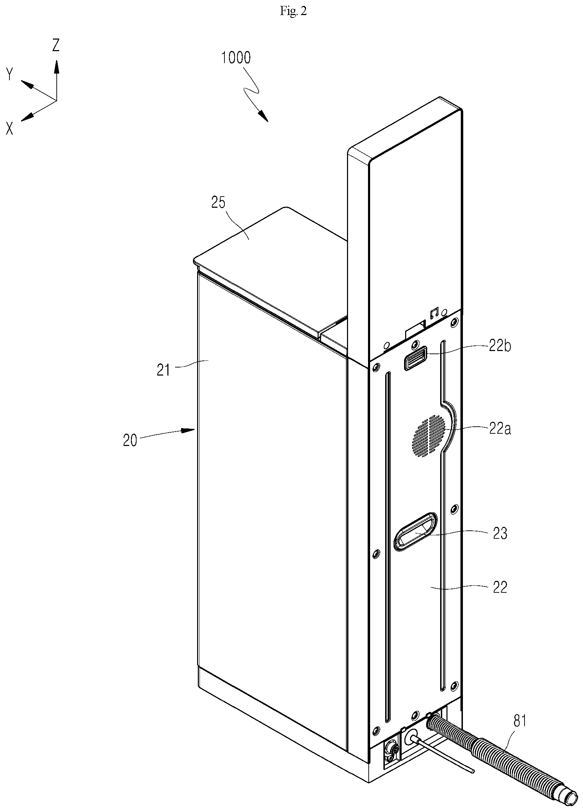

FIG. 2 is a perspective view of the cup washer 1000 of FTG. 1 viewed from a rear upper side.

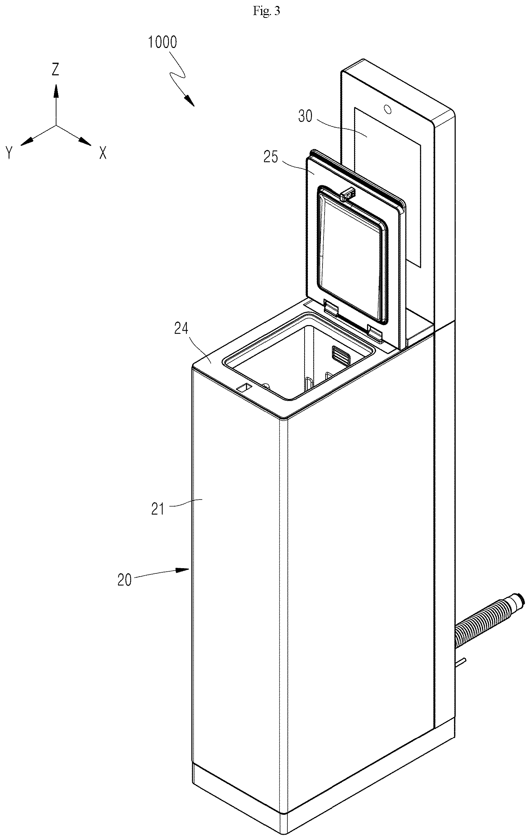

FIG. 3 is a perspective view of the cup washer 1000 of FIG. 1 in the state in which a front panel 21 is removed

Recently, as the awareness of practicing carbon neutrality has expanded throughout society, the number of people carrying personal or reusable cups has increased. Accordingly, the number of government offices, companies, and stores where cup washers are installed for the hygiene and convenience of users (employees) is increasing. The cup washer 1000 according to an embodiment of the present disclosure may be installed in government offices, companies, or stores. The above-mentioned personal cup or reusable cup may mean a cup (made of a glass or plastic material), a mug, a tumbler, or the like.

The cup washer 1000 according to an embodiment of the present disclosure may have a tower shape that is long substantially in the vertical direction. Therefore, the floor area required for installation of the cup washer 1000 may be small compared to the total volume of the cup washer 1000.

The cup washer 1000 according to an embodiment of the present disclosure may include a frame 10, a panel 20, a display unit 30, a tub 100, a spray unit 300, a water reservoir 50, a sump 60, a circulation pump 70, a drain pump 80, an additive storage part 500, an additive supply part 600, a drying part 400, and a controller 40. The controller 40 may integrally control the display unit 30, the circulation pump 70, the drain pump 80, and the additive supply part 600.

The frame 10 may configure the framework of the cup washer 1000. The frame 10 may include a base frame 13, a front frame 11, a rear frame 12, and a horizontal frame 14.

The base frame 13 may configure the lowermost portion of the cup washer 1000. The base frame 13 may be seated on the ground. The front frame 11 and the rear frame 12 may define a shape extending upward from the edges of the base frame 13. The horizontal frame 14 may interconnect the front frame 11 and the rear frame 12 in the horizontal direction.

The panel 20 may be coupled to the frame 10 to isolate the components of the cup washer 1000 from the external environment The panel 20 may include a front panel 21, a rear panel 22, a door 25, and a storage unit cover 26.

The front panel 21 may be coupled to the frame 10 to define the front surface and both side surfaces of the cup washer 1000 under the door 25. The rear panel 22 may be coupled to the frame 10 to define the rear surface of the cup washer 1000 below the display unit 30.

A vent 22a may be provided in the rear panel 22. Outside air may flow into the drying part 400 through the vent 22a An air outlet 22b may be provided in the rear panel 22. Air from the drying part 400 may be discharged to the outside through the air outlet 22b. A handle 23 may be provided on the rear panel 22. A manager may easily move the cup washer 1000 by holding the handle 23.

The display unit 30 may be provided in the upper portion of the cup washer 1000. The screen of the display unit 30 may face the front side of the cup washer 1000. Therefore, the user of the cup washer 1000 may visually check the screen of the display unit 30 from the front side of the cup washer 1000. The display unit 30 may output the operating state of the cup washer 1000, such as "wash", "rinse", and "dry".

The display unit 30 may be configured with a touch panel. The user may input an operation command for the cup washer 1000 through the display unit 30.

The user may select a washing mode through the screen of the display unit 30. As an example, the user may select a "normal washing mode" or a "quick washing mode" through the screen of the display unit 30. The normal washing mode may refer to a mode in which a cup C is washed using a detergent and a rinse. The quick washing mode may refer to a mode in which the cup C is washed only by spraying water without a detergent or a rinse.

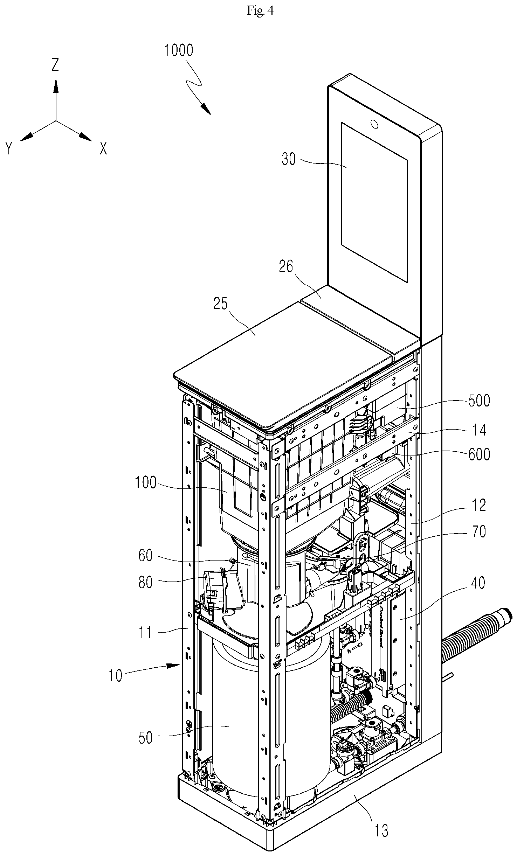

FIG. 4 is a partial perspective view of the cup washer 1000 of FIG. 1, illustrating the state in which a door 25 is opened

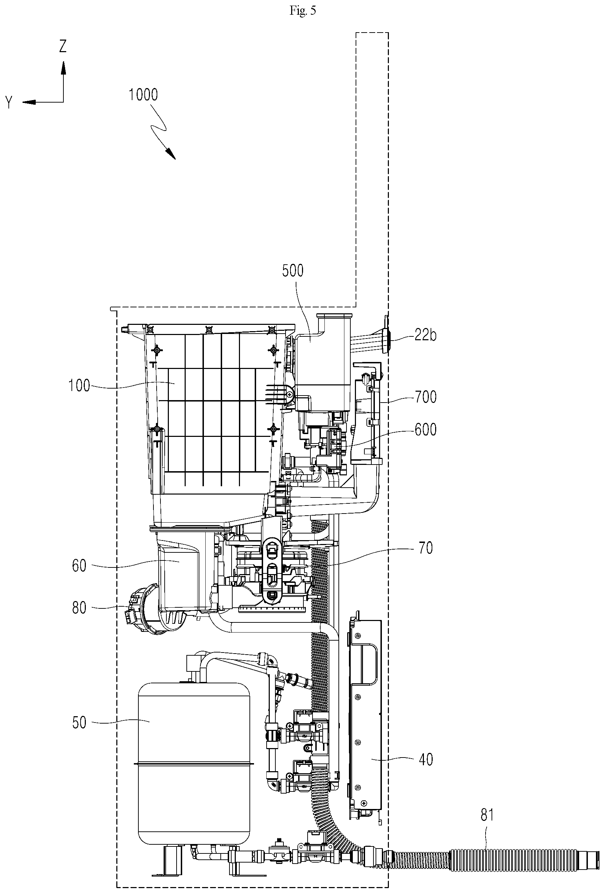

FIG. 5 is a side view of the cup washer 1000 of FIG. 1, in which the frame 10, the panel 20, the door 25, and the display unit 30 are not illustrated

The panel 20 may include a top panel 24. The top panel 24 may be coupled to the upper end portion of the front panel 21. The top panel 24 may isolate the components inside the front panel 21 from the external environment at the upper end portion of the front panel 21, except for an upper opening of the tub 100 and an upper opening of the additive storage part 500. The storage unit cover 26 may open or close the upper opening of the additive storage part 500.

The door 25 may open or close the top opening of the tub 100. The door 25 may be rotatably coupled to the top panel 24. When the door 25 is closed (see FIG. 1), the door 25 may protrude forward from the front panel 21. When the door 25 is closed, the user may easily rotate (open) the door 25 by lifting the forward protruding portion upward.

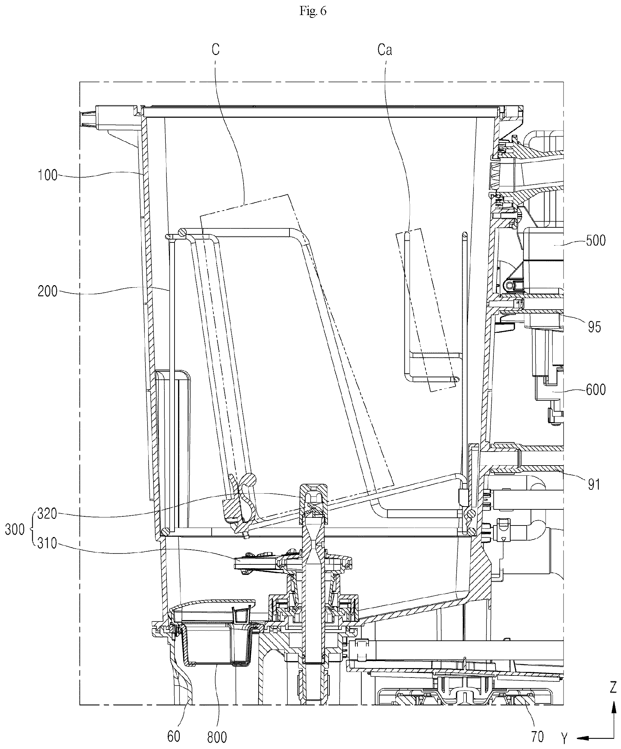

FIG. 6 is a partial cross-sectional view of the cup washer 1000 of FIG. 5, illustrating a cup C and a cup lid Ca mounted on the rack200 with imaginary lines.

The tub 100 may provide therein a space (hereinafter, referred to as a "washing space") in which the cup C is washed The tub 100 may be in the form of a hollow three-dimensional object with an opening (hereinafter, referred to as a "cup inlet") at approximately the upper end thereof The door 25 can open or close the cup inlet The user may put the cup C into the washing space or take out the cup C from the washing space through the cup inlet.

A rack 200 on which the cup C and the cup lid Ca are mounted may be provided in the washing space. The rack 200 may be put into or taken out from the washing space through the cup inlet The cup C and the cup lid Ca may be spaced apart from the inner surface of the tub 100 while being mounted on the rack 200. The cup C may be placed on the rack 200 with its top and bottom turned upside down

The cup washer 1000 according to an embodiment of the present disclosure may include a spray unit 300. The spray unit 300 may be installed in the lower portion of the tub 100. When the cup C is mounted on the rack 200, the upper opening of the cup C may be located above the spray unit 300. The spray unit 300 is able to spray water toward the inside and outside of the cup C in the washing space. The spray unit 300 may include a first spray nozzle 310 and a second spray nozzle 320.

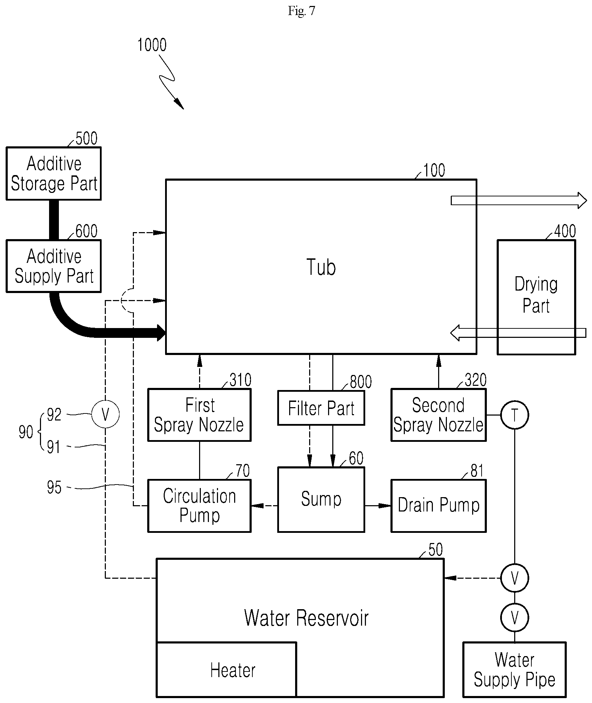

FIG. 7 is a schematic view of the cup washer 1000 according to an embodiment of the present disclosure. FIG. 7 is a schematic view illustrating the movement paths of water, additive, and air, and the relative arrangement of components may differ from reality.

In FIG. 7, the dotted line arrows may indicate the path of water sprayed by the first spray nozzle 310. In addition, the solid arrows may indicate the path of water sprayed by the second spray nozzle 320. In addition, the thick black arrow may indicate the movement path of the additive. In addition, the thick white arrows may refer to air movement paths.

The water reservoir 50 is able to store water. The water reservoir 50 may be heavier than other components. The water reservoir 50 may be coupled to the top surface of the base frame 13. Therefore, the overall center of gravity of the cup washer 1000 may be lowered Therefore, even when the cup washer 1000 is configured in a tower shape that is long substantially in the vertical direction, the possibility of the cup washer 1000 falling over may be reduced

The water reservoir 50 may be connected to a water supply pipe. Water from the water supply pipe may be supplied to the water reservoir 50. A water level sensor may be installed in the water reservoir 50. An opening/closing valve may be provided between the water supply pipe and the water reservoir 50. The controller 40 can control the opening/closing valve by receiving a signal from the water level sensor.

A heater and a temperature sensor may be provided in the water reservoir 50. The heater may heat the water in the waterreservoir 50. The controller 40 may control the heater by receiving a signal from the temperature sensor.

The water in the water reservoir 50 may be supplied into the tub 100 through the washing water supply part 90. The washing water supply part 90 may include a washing water supply pipe 91 and an opening/closing valve 92. The controller 40 may control the opening/closing valve 92.

The additive storage part 500 may store an additive therein. The additive supply part 600 may supply the additive stored in the additive storage part 500 into the tub 100.

As described above, the user may select a washing mode through the screen of the display unit 30. As an example, the user may select a "normal washing mode" or a "quick washing mode" through the screen of the display unit 30.

The normal washing mode may refer to a mode in which a cup C is washed using a detergent and a rinse. The quick washing mode may refer to a mode in which a cup C is washed only by spraying water without a detergent or a rinse.

The normal washing mode may include a normal washing step and a drying step. When the user selects the "normal washing mode" through the screen of the display unit 30, the water in the water reservoir 50 may be supplied into the tub 100 through the warring water supply part 90. The washing water supply part 90 may include a washing water supply pipe 91 and an opening/closing valve. In this case, the additive supply part 600 may supply the additive into the tub 100 for a set period of time. The additive may be mixed with water within the tub 100.

The water mixed with the additive may flow into the sump 60 on the lower side of the tub 100 through the filter part 800 by gravity. The circulation pump 70 may press the water flowing into the sump 60 toward the first spray nozzle 310.

The first spray nozzle 310may spray the water mixed with the additive toward the inside and outside of the cup C. In addition, the circulation pump 70 may supply water flowing into the sump 60 into the tub 100 through the washing water spray unit 95. The washing water spray unit 95 may spray the water mixed with the additive toward the cup lid Ca

The circulation pump 70 may operate for a set period of time. When the set period of time elapses, the water flowing into the sump 60 may move to a drain pipe 81 through the drain pump 80 and may be drained out of the cup washer 1000 (completing of the normal washing step).

The additive may include a first additive and a second additive. The first additive may be provided as a detergent The second additive may be provided as a rinse. In this case, the normal washing step may include a first normal washing step and a second normal washing step.

The first normal washing step may be the step of washing the cup C with the water mixed with the first additive. The second normal washing step may be the step of washing the cup C with the watermixed with the second additive. The first normal washing step and the second normal washing step may be performed sequentially.

Once the normal washing step is completed, the drying step may be performed. The drying part 400 may supply heated air into the tub 100. During this process, moistair within the tub 100 may be discharged to the outside. The drying stepmay beperformedfora set period of time (completing of the drying step).

The second spray nozzle 320 may be connected to the water supply pipe. A three-way valve may be installed between the water supply pipe and the water reservoir 50. The second spray nozzle 320 may be connected to the water supply pipe through the three-way valve. An opening/closing valve may be provided between the second spray nozzle 320 and the three-way valve. The controller 40 may control the three-way valve and the open/close valve.

The quick washing mode may include a quick washing step and a drying step. When the user selects the "quick washing mode" through the screen of the display unit 30, the second spray nozzle 320 may be connected to the water supply pipe through the three-way valve. In the quick washing mode, the additive may not be supplied into the tub 100.

The second spray nozzle 320 may spray water not mixed with the additive into the cup C. The opening/closing valve may open the flow path between the water supply pipe and the second spray nozzle 320 for a set period of time. When the set period of time elapses, the water flowing into the sump 60 may move to a drain pipe 81 through the drain pump 80 and may be drained out of the cup washer 1000 (completing of the quick washing step).

Once the quick washing step is completed, the drying step may be performed. The drying part 400 may supply heated air into the tub 100. During this process, moistair within the tub 100 may be discharged to the outside. The drying stepmay beperformedfora set period of time (completing of the drying step).

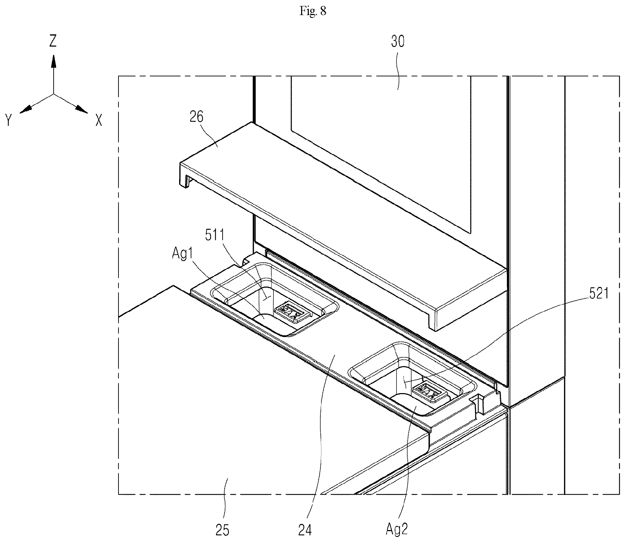

FIG. 8 is a partial perspective view of the cup washer 1000 of FIG. 1, illustrating the state in which the storage unit cover 26 is opened

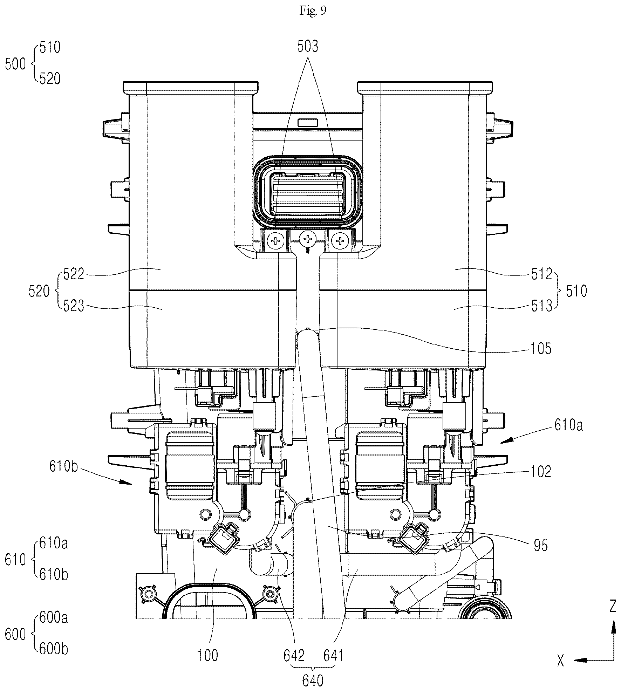

FIG. 9 is a partial rear view of the cup washer 1000 of FTG. 5, illustrating the tub 100, the additive storage part 500, and the additive supply part 600.

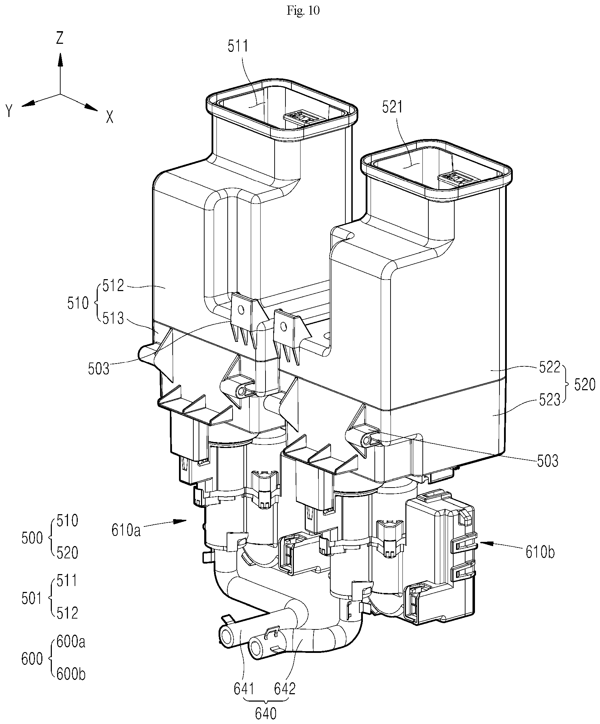

FIG. 10 is a perspective view illustrating the additive storage part 500 and the additive supply part 600 of FIG. 9.

The additive storage part 500 may be provided behind the tub 100. The additive storage part 500 may be coupled to the tub 100 by a coupling member such as a bolt. Bolt coupling portions 503 where coupling members are coupled to the additive storage part 500 and the tub 100 may be formed.

The additive storage part 500 may store an additive Ag in an inner portion thereof (hereinafter, referred to as a "storage space 501"). The additive Ag may include a first additive Ag1 and a second additive Ag2. The first additive Ag1 may be provided as a detergent The second additive Ag2 may be provided as a rinse. The additive storage part 500 may include a first additive storage part 510 and a second additive storage part 520.

The first additive storage part 510 may store the first additive Ag1 inside an inner portion thereof (hereinafter, referred to as a "first storage space511"). The first additive storage part 510 may have an opening (hereinafter. referred to as"first additive inlet")at the upper end thereof The user may fill the first additive Ag 1 into the first storage space 511 through the first additive inlet An additive discharge hole 502 may be provided in the lower portion of the first additive storage part 510.

The second additive storage part 520 may store the second additive Ag2 in the inner portion thereof (hereinafter, referred to as a "second storage space 521"). The second additive storage part 520 may have an opening (hereinafter, referred to as a "second additive inlet") at the upper end thereof The user may fill the second additive Ag2 into the second storage space 521 through the second additive inlet An additive discharge hole 502 may be provided in the lower portion of the second additive storage part 520.

The storage unit cover 26 may simultaneously open or close the first additive inlet and the second additive inlet The top panel 24 may isolate the components inside the front panel 21 from the external environment at the upper end portion of the front panel 21, except for the cup inlet and the additive inlets. The edge portion (hereinafter, referred to as a "cover edge portion") of the storage unit cover 26 may be bent downward. In the state in which the cover edge portion seated on the top panel 24, the storage unit cover 26 may simultaneously close the first additive inlet and the second additive inlet

The first additive storage part 510 may include a first upper storage unit 512 and a first lower storage unit 513. The first upper storage unit 512 may define the upper portion of the first storage space 511. The first lower storage unit 513 may define the lower portion of the first storage space 511. The lower end portion of the first upper storage unit 512 and the upper end portion of the first lower storage unit 513 may be bonded to each other by adhesive, heat fusion, or the like.

A floater and a floater sensor may be installed in the first storage space 511. The floater may be floated by the first additive Ag1. The floater sensor may detect the height of the floater. The controller 40 may receive a signal from the floater sensor. The controller 40 may output the amount of the first additive Ag1 on the screen of the display unit 30.

The second additive storage part 520 may include a second upper storage unit 522 and a second lower storage unit 523. The second upper storage unit 522 may define the upper portion of the second storage space 521. The second lower storage unit 523 may define the lower portion of the second storage space 521. The lower end portion of the second upper storage unit 522 and the upper end portion of the second lower storage unit 523 may be bonded to each other by adhesive, heat fusion, or the like.

A floater and a floater sensor may be installed in the second storage space 521. The floater may be floated by the second additive Ag2. The floater sensor may detect the height of the floater. The controller 40 may receive a signal from the floater sensor. The controller 40 may output the amount of the second additive Ag2 on the screen of the display unit 30.

The arrow on the X-axis may point to the right based on the user's field of view in front of the cup washer 1000. The arrow on the Y axis may point to the front The arrow on the Z axis can point to the top. With respect to the X-axis direction, the first additive storage part 510 may be located on one side, and the second additive storage part 520 may be located on the other side. In an embodiment of the present disclosure, the first additive storage part 510 may be located on the left from the rear of the tub 100, and the second additive storage part 520 may be located on the right from the rear of the tub 100.

The first upper storage unit 512 and the second upper storage unit 522 may be symmetrical with respect to the virtual YZ plane. Therefore, with respect to the X-axis direction, the first additive inlet and the second additive inlet may be spaced apart from each other (see FIG. 8).

Therefore, even if the first additive Ag1 falls or overflows between the first additive inlet and the second additive inlet due to the user's carelessness or the tilt of the cup washer 1000, the first additive Ag 1 may be prevented from flowing into the second storage space 521.

The first lower storage unit 513 and the second lower storage unit 523 may be manufactured in the same form. Therefore, when manufacturing the first additive storage part 510 and the second additive storage part 520, the first lower storage unit 513 and the second lower storage unit 523 may be manufactured in the same mold. Therefore, the process of manufacturing the additive storage part 500 can be simplified.

The additive supply part 600 may be provided below the additive storage part 500 behind the tub 100. The additive supply part 600 may be coupled to the additive storage part 500 by a coupling member and hook coupling.

The additive supply part 600 may supply the additive Ag from the storage space 501 into the tub 100. As described above, the additive Ag may include a first additive Ag1 and a second additive Ag2. The first additive Ag1 may be provided as a detergent The second additive Ag2 may be provided as a rinse. The additive supply part 600 may include a first additive supply part 600a and a second additive supply part 600b.

The first additive supply part 600a may be provided below the first additive storage part 510 behind the tub 100. The first additive supply part600a may supply the first additive Ag1 from the first storage space 511 into the tub 100.

The second additive supply part 600b may be provided below the second additive storage part 520 behind the tub 100. The second additive supply part 600b may supply the second additive Ag2 from the second storage space 521 into the tub 100.

As described above, the additive Ag may include a first additive Ag1 and a second additive Ag2. In this case, the normal washing step may include a first normal washing step and a second normal washing step. The first normal washing step may be the step of washing the cup C with the water mixed with the first additive Ag1. The second normal washing step may be the step of washing the cup C with the water mixed with the second additive Ag2.

The controller 40 may individually control the first additive supply part 600a and the second additive supply part 600b. Accordingly, the controller 40 may sequentially perform the first normal washing step and the second normal washing step. That is, after completing the washing of the cup C using the first additive Ag1 (first normal washing step), the controller 40 may perform the washing of the cup C using the second additive Ag2 (second normal washing step).

The first additive supply part 600a and the second additive supply part 600b may be manufactured in the same form, except for the lengths of the additive transfer pipes 640. When manufacturing the cup washer 1000, the first additive supply part 600a and the second additive supply part 600b may be manufactured in the same manufacturing process, and the first additive supply part 600a and the second additive supply part 600b may be separated depending on the assembly locations thereof Therefore, the manufacturing process of the additive supply part 600 can be simplified.

Since the first additive supply part 600a and the second additive supply part 600b are manufactured in the same form, the detailed configurations of the first additive supply part 600a and the second additive supply part 600b will be described simultaneously below. Hereinafter, the additive supply part 600 should be understood to mean the first additive supply part 600a and the second additive supply part 600b.

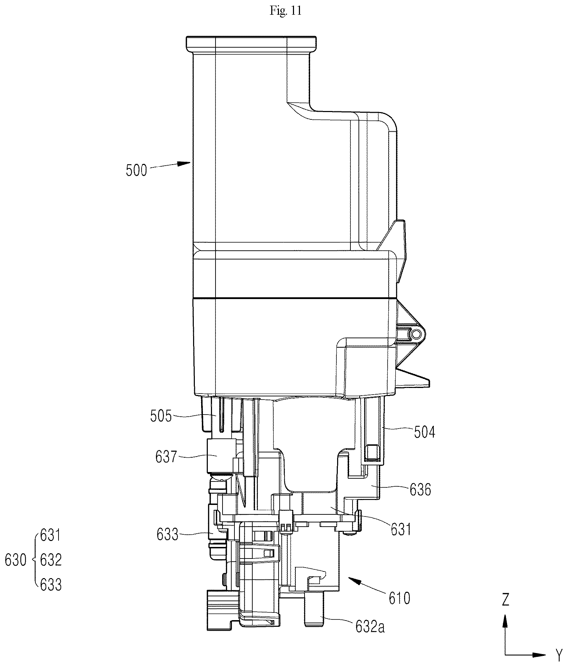

FIG. 11 is a side view illustrating the additive storage part 500 and the additive supply part 600 of FIG. 10.

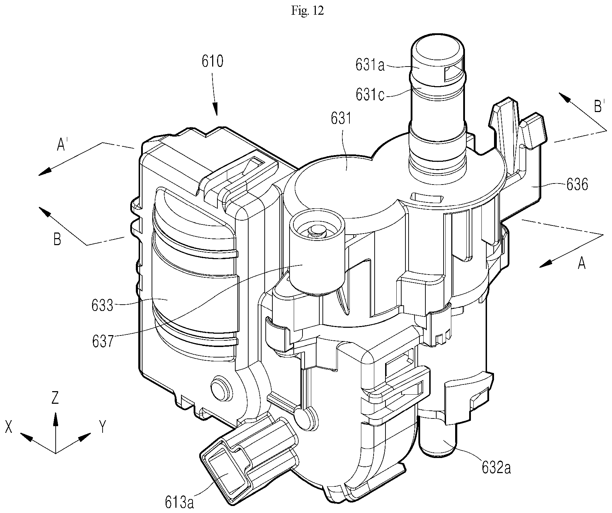

FIG. 12 is a side view illustrating the additive pump 610 of FIG. 10.

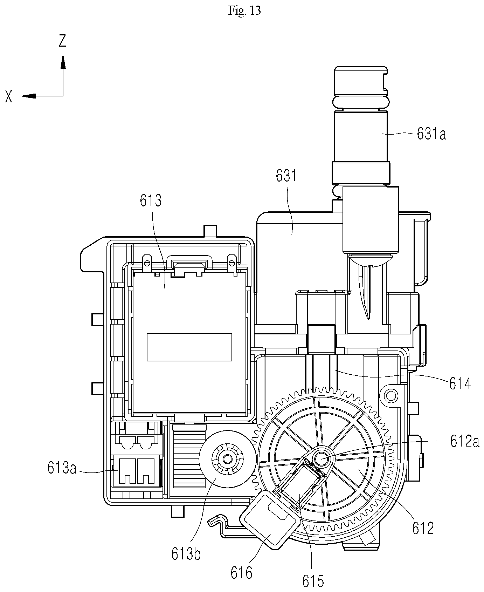

FIG. 13 is a view illustrating the additive pump 610 of FIG. 12, in which the illustration of the cover housing 633 is omitted

The additive supply part 600 may include an additive pump 610 and an additive transfer pipe 640 (see FIG. 10).

The additive pump 610 may suction and discharge the additive Ag of the additive storage part 500. The additive pump 610 may be configured as a reciprocating pump. The additive pump 610 may include a piston 611, a rotary plate 612, an additive motor 613, a connecting rod 614, and a pump housing 630.

The pump housing 630 may provide an accommodation space therein. Here, the accommodation space may mean the space that accommodates the piston 611, the rotary plate 612, the additive motor 613, and the connecting rod 614.

The pump housing 630 may be coupled under the additive storage part 500. A first cover fastening portion 636 may be provided on the pump housing 630, and a first storage part fastening portion 504 may be provided on the lower portion of the additive storage part 500. The first cover fastening portion 636 may be coupled to the first storage part fastening portion 504. For example, the first cover fastening portion 636 and the first storage part fastening portion 504 may be detachably coupled with a quick release buckle structure.

A second cover fastening portion 637 may be provided on the pump housing 630, and a second storage part fastening portion 505 may be provided on the lower portion of the additive storage part 500. The second cover fastening portion 637 may be coupled to the second storage part fastening portion 505. For example, the second cover fastening portion 637 and the second storage part fastening portion 505 may be detachably coupled with a bolt fastening structure.

The pump housing 630 may include a body housing 631 and a cover housing 633. A plurality of protrusions may be provided on the body housing 631. A plurality of engagement portions may be provided on the edge of the cover housing 633.

The cover housing 633 may move forward (right in FIG. 11) to allow the engagement portions are engaged with the protrusions. Therefore, the cover housing 633 may be coupled to the body housing 631 (see FIG. 12). In this case, the cover housing 633 may close the accommodation space. When the engagement portions are separated from the protrusions, the cover housing 633 may be separated from the body housing 631 (see FIG. 13). Therefore, the cover housing 633 may open the accommodation space.

The additive motor 613 may be coupled to the body housing 631. The rotary plate 612 may be coupled to the body housing 631 to be rotatable about the center shaft 612a. The additive motor 613 may transmit rotational power to the rotary plate 612 through a transmission gear 613b.

The transmission gear 613b and the rotary plate 612 may be connected by a spur gear. A shaft (hereinafter referred to as a "motor shaft") of the additive motor 613 and the transmission gear 613b may be connected by a worm and a worm gear. The worm may be provided on the motor shaft, and the worm gear may be provided on the transmission gear 613b.

The transmission of motion from the worm to the worm gear is possible, but the transmission of motion from the worm gear to the worm is not possible. Therefore, the rotation of the motor shaft may be blocked when the motor shaft is stopped (when the controller 40 does not operate the additive motor 613). Therefore, the controller 40 may block the additive Ag from moving into the tub 100 when the additive motor 613 does not operate. In addition, the change in the pumped amount of additive Ag due to the change in the operating speed of the piston 611 due to unintended external factors may be minimized

The additive pump 610 may include a magnetic force member 615 and a magnetic force detector 616 (see FIG. 13).

The magnetic force member 615 may be coupled to one surface of the rotary plate 612. Therefore, the magnetic force member 615 may rotate along the circumferential direction of the rotary plate 612 around the center shaft 612a by the additive motor 613.

The magnetic force member 615 may be a permanent magnet The magnetic force member 615 may be a bar magnet with different poles at opposite both ends. On one surface of the rotary plate 612, one pole of the bar magnet may face the center shaft 612a, and the other pole may face the opposite side. That is, on one surface of the rotary plate 612, the length direction of the bar magnet may coincide with the radial direction of the rotary plate 612 (see FIG. 13). Magnetic flux refers to the number of magnetic force lines passing vertically through a surface. A magnet has a high density of magnetic force lines at opposite end poles. Therefore, the magnetic force member 615 may form the maximum magnetic flux in the radial direction of the rotary plate 612 on one surface of the rotary plate 612.

The magnetic force detector 616 may be equipped with a Hall sensor to detect the magnetic field of the magnetic force member 615. The magnetic force detector 616 may be a linear Hall sensor or a switch Hall sensor. The linear Hall sensor may provide a continuous output voltage that changes linearly depending on the strength of the magnetic field. The switch Hall sensor may provide a digital output that switches between two states depending on the presence or absence of a magnetic field.

A detector insertion portion can be provided in the cover housing 633. The magnetic force detector 616 may be inserted into the detector insertion portion The magnetic force detector 616 may be provided on one side of the rotation path of the magnetic force member 615 centered on the center shaft 612a of the rotary plate 612, and may detect the maximum magnetic flux of the magnetic force member 615.

The magnetic force detector 616 may be connected to the controller 40. Therefore, the controller 40 may detect the rotation of the rotary plate 612 using the magnetic force detector 616. The controller 40 may control the input amount of the additive Ag in response to a signal from the magnetic force detector 616. For example, the controller 40 may stop the additive motor 613 when receiving a signal from the magnetic force detector 616 N times after rotating the additive motor 613. Therefore, the controller 40 can precisely control the amount of additive Ag supplied into the tub 100.

The additive motor 613 may be a DC motor. However, due to the characteristics of the DC motor, the operation speed of the piston 611 in the additive motor 613 may vary due to external influences such as differences in detergent viscosity, and variations in frictional force due to dimensional fluctuations in the components of the additive pump 610.

Conventional additive pumps supply additive Ag by controlling the pumping time. In the pumping method, it was not possible to identify changes in piston constraints or operating time. Accordingly, there was a variation in the pumped amount of additive Ag. Therefore, in the conventional additive pump control method, which is a time-controlled pumping method, piston constraints or operating time changes could not be identified, resulting in variations in the pumped amount of additive Ag supplied to the tub.

A cup washer 1000 according to an embodiment of the present disclosure detects the rotation of the rotary plate 612 using a Hall sensor. Thus, the accuracy of the pumped amount of additive Ag can be increased by precisely controlling the position of the piston 611. Therefore, the variation in the pumped amount caused by the change in the operating speed of the piston 611 due to external factors can be minimized. In addition, the restrictions of the piston 611 due to external factors may be identified through position detection by the Hall sensor.

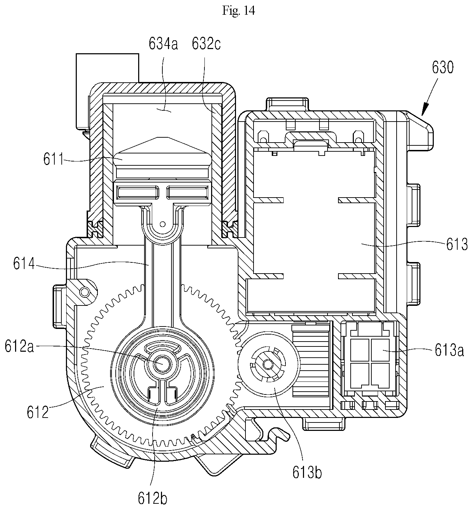

FIG. 14 is a cross-sectional view taken along line A-A' in FIG. 12, illustrating the state in which the piston 611 that reciprocates up and down is located at the bottom dead center.

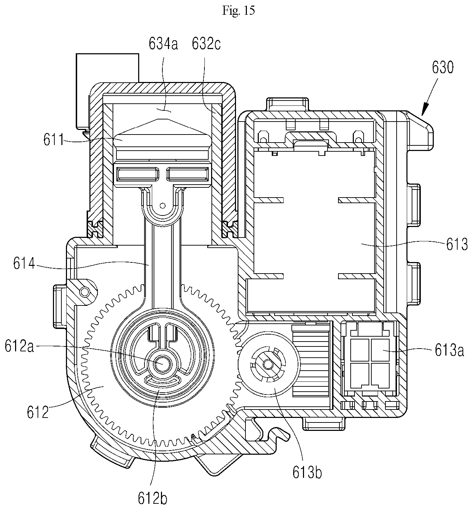

FIG. 15 is a cross-sectional view taken along line A-A' in FIG. 12, illustrating the state in which the piston 611 that reciprocates up and down is located at the top dead center.

The rotary plate 612 may provide an eccentric shaft 612b on the other surface. Here, the other surface of the rotary plate 612 may mean the opposite surface of the surface where the magnetic force member 615 is coupled. The eccentric shaft 612b may be radially spaced from the center shaft 612a of the rotary plate 612. Therefore, the eccentric shaft 615 may rotate along the circumferential direction of the rotary plate 612 around the center shaft 612a by the additive motor 613.

A cylinder 632c may be provided in the pump housing 630. The cylinder 632c may refer to a portion where the piston 611 reciprocates. The piston 611 may be connected to the eccentric shaft 612b by the connecting rod 614. The connecting rod 614 may convert the rotating motion of the eccentric shaft 612b into the reciprocating motion of the piston 611. Therefore, the piston 611 can reciprocate within the cylinder 632c in conjunction with the rotation of the rotary plate 612.

The piston 611 may reciprocate up and down within the cylinder 632c. The eccentric shaft 612b may be manufactured such that its center is close to the center shaft 612a of the rotary plate 612. Therefore, the distance from the top dead point to the bottom dead point (hereinafter referred to as "stroke") may be short Therefore, the additive pump 610 may have a small stroke volume. Here, the stroke volume may mean the product of the cross-sectional area of the piston 611 and the stroke. Therefore, the discharge amount per cycle of the additive pump 610 may be small. Therefore, the pumped amount of additive Ag supplied to the inside of the tub 100 may be finely adjusted

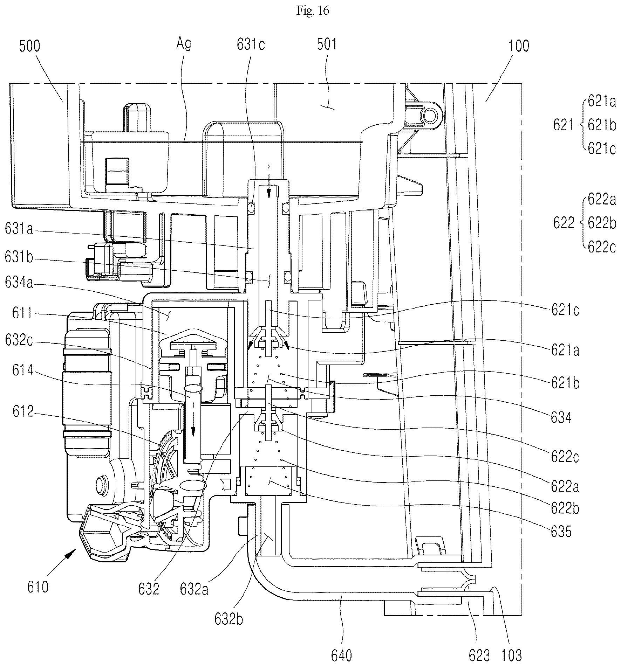

FIG. 16 is a partial cross-sectional view of the cup washer 1000 of FIG. 9, illustrating the additive pump 610 as a cross-section taken along line B-B' inFIG. 12. FIG. 16 illustrates the state in which the piston 611 that reciprocates up and down is located at the bottom dead center.

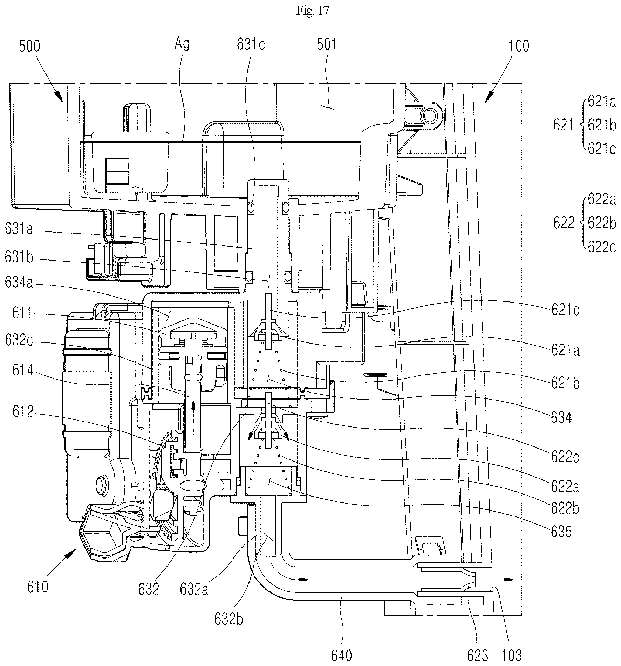

FIG. 17 is a partial cross-sectional view of the cup washer 1000 of FIG. 9, illustrating the additive pump 610 as a cross-section taken along line B-B' inFIG. 12. FIG. 17 illustrates the state in which the piston 611 that reciprocates up and down is located at the top dead center.

The pump housing 630 may be disposed below the bottom surface of the storage space 501. Therefore, the additive pump 610 may be disposed below the bottom surface of the storage space 501. Therefore, the additive Ag in the storage space 501 may move to the additive pump 610 by gravity. The pump housing 630 may provide a suction space 634 and a connecting space 635 therein.

The suction space 634 may refer to a space where the additive Ag of the additive storage part 500 is suctioned during the reciprocating motion of the piston 611. The suction space 634 may be disposed below the storage space 501. Therefore, the additive Ag in the storage space 501 may move toward the suction space 634 by gravity.

The pump housing 630 may have a first additive supply pipe 631a in the upper portion thereof. The first additive supply pipe 621 may be provided in the form of a circular hollow pipe that is long substantially in the vertical direction The first additive supply pipe 631a may connect the lower portion of the additive storage part 500 to the suction space of the additive pump 610.

The first additive supply pipe 631amay form a passage (hereinafter referred to as a "first supply passage 631b") through which the additive Ag of the additive storage part 500 moves to the suction space side of the additive pump 610. The first supply passage 631b may have a shape that is substantially long in the vertical direction.

An additive discharge hole 502 may be provided in the lower portion of the additive storage part 500 into which the first additive supply pipe 631a is inserted in the vertical direction. The inner surface of the additive discharge hole 502 may have a long cylindrical shape in the vertical direction. The first additive supply pipe 631a may be inserted into the additive discharge hole 502 by moving upward from the bottom of the additive storage part 500. Therefore, the first additive supply pipe 631a may be coupled to the additive storage part 500.

In the storage space 501, the bottom surface of the additive storage part 500 may slope downward toward the additive discharge hole 502. Therefore, almost all of the additive Ag filled in the storage space 501 may move toward the additive discharge hole 502 by gravity.

The upper end of the first additive supply pipe 631a may be slightly higher than the lowest portion of the storage space 501. In the upper end portion of the first additive supply pipe 631a, the opening of the first supply passage 631b may be open not only upward but also laterally.

Accordingly, in the upper end portion of the first additive supply pipe 631a, the opening of the first supply passage 631b may have substantially the same height as the lowest portion of the storage space 501. Therefore, almost all of the additive Ag filled in the storage space 501 may move to the first supply passage 631b by gravity.

A pair of sealing members 631c may be interposed between the outer surface of the first additive supply pipe 631a and the inner surface of the additive discharge hole 502. The sealing member 631c may be an O-ring. The pair of sealing members 631c may be spaced apart from each other in the vertical direction within the additive discharge hole 502.

Of the pair of sealing members 631c, the upper sealing member 631c may be located in the upper end portion of the additive discharge hole 502. Of the pair of sealing members 631c, the lower sealing member 631c may be located in the lower end portion of the additive discharge hole 502.

The pair of sealing members 631c may doubly prevent leakage of the additive Ag through the space between the outer surface of the first additive supply pipe 631a and the inner surface of the additive discharge hole 502. Therefore, the leakage of the additive Ag through the space between the outer surface of the first additive supply pipe 631a and the inner surface of the additive discharge hole 502 can be blocked

The connecting space 635 may refer to a space connecting the outlet of the suction space 634 and the inlet of the additive transfer pipe 640. The connecting space 635 may be disposed below the suction space 634. Therefore, the additive Ag in the suction space 634 may move toward the connecting space 635 by gravity.

The pump housing 630 may include a partition wall 632 therein The suction space 634 and the connecting space 635 may be partitioned by the partition wall 632. The outlet of the suction space 634 may be formed in the partition wall 632. The additive Ag in the suction space 634 may move to the connecting space 635 through the outlet of the partition wall 632.

The connecting space 635 may be disposed above the additive transfer pipe 640. Therefore, the additive Ag in the connecting space 635 may move toward the additive transfer pipe 640 by gravity.

The pump housing 630 may have a second additive supply pipe in the lower portion The second additive supply pipe 632amay be provided in the form of a circular hollow pipe that is long substantially in the vertical direction The second additive supply pipe 632a may connect the connecting space 635 of the additive pump 610 to the additive transfer pipe 640.

The second additive supply pipe 632amay provide a passage (hereinafter referred to as a "second supply passage 632b") through which the additive Ag discharged from the connecting space 635 of the additive pump 610 moves to the outside of the pump housing 630. The second supply passage 632b may have a shape that is substantially long in the vertical direction.

The inlet of the additive transfer pipe 640 may be connected while surrounding the outer surface of the second additive supply pipe 632a Therefore, all of the additive Ag moving downward from the second additive supply pipe 632a can move to the additive transfer pipe 640.

The additive transfer pipe 640 may connect the pump housing 630 and the tub 100 so that the additive Ag discharged from the suction space 634 moves to the tub 100. The additive transfer pipe 640 may be connected to the tub 100 below the connecting space 635. Therefore, the additive transfer pipe 640 can supply the additive Ag into the tub 100 from below the connecting space 635. Therefore, the additive Ag discharged from the additive pump 610 can move to the outlet of the additive transport pipe 640 by gravity.

The additive transfer pipe 640 may be connected to the additive inlet 103 on the inner wall of the tub 100. That is, the additive supply part 600 may supply the additive Ag into the tub 100 through the additive inlet 103.

The additive supply part 600 may include a first check valve 621, a second check valve 622, and a third check valve 623.

The first check valve 621 may include an inlet plug 621a, an inlet elastic member 621b, and an inlet guide bar 621c.

The inlet plug 621a may be provided in the suction space 634. The inlet plug 621a may be made of an elastically deformable material such as rubber or silicone. The inlet plug 621amay block the inlet of the suction space 634 by the elastic force of the inlet elastic member 621b. The inlet of the suction space 634 may refer to the outlet of the first additive supply pipe 631a, that is, the lower end of the first supply passage 631b.

The inlet elastic member 621b may be provided in the suction space 634. The inlet elastic member 621b may be elastically deformed in the vertical direction. The inlet elastic member 621b may be a compression spring. The lower end of the inlet elastic member 621b may be located at the lower end of the suction space 634. The inlet elastic member 621b may push the inlet plug 621a toward the inlet of the suction space 634 by its own elastic force.

The inlet guide bar 621c may extend upward from the inlet plug 621a The inlet guide bar 621c may be inserted into the inlet of the suction space 634 by a predetermined length. Therefore, even when the inlet elastic member 621b is compressed, the inlet guide bar 621c can maintain the state of being partially inserted into the inlet of the suction space 634. Therefore, when the inlet elastic member 621b recovers elasticity, the inlet guide bar 621c can guide the inlet plug 621a toward the inlet of the suction space 634.

The second check valve 622 may include an outlet plug 622a, an outlet elastic member 622b, and an outlet guide bar 622c.

The outlet plug 622amay be provided in the connecting space 635. The outlet plug 622a may be made of an elastically deformable material such as rubber or silicone. The outlet plug 622a may block the inlet of the connecting space 635 by the elastic force of the outlet elastic member 622b. The inlet of the connecting space 635 may refer to the outlet of the suction space 634 provided in the partition wall 632.

An outlet elastic member 622b may be provided in the connecting space 635. The outlet elastic member 622b may be elastically deformed in the vertical direction. The outlet elastic member 622b may be a compression spring. The lower end of the outlet elastic member 622b may be located at the lower end of the connecting space 635. The outlet elastic member 622b may push the outlet plug 622a toward the outlet of the suction space 634 by its own elastic force.

The outlet guide bar 622c may extend upward from the outlet plug 622a The outlet guide bar 622c may be inserted into the outlet of the suction space 634 by a predetermined length. Therefore, even when the outlet elastic member 622b is compressed, the outlet guide bar 622c can maintain the state of being partially inserted into the outlet of the suction space 634. Therefore, when the outlet elastic member 622b recovers elasticity, the outlet guide bar 622c can guide the outlet plug 622a toward the outlet of the suction space 634.

The third check valve 623 may be provided on the outlet side of the additive transfer pipe 640. The third check valve 623 may open the outlet of the additive transfer pipe 640 by the pressure increase inside the additive transfer pipe 640 during the reciprocating motion of the piston 611. The third check valve 623 may be a duckbill valve.

The piston 611 may reciprocate up and down within the cylinder 632c. The suction space 634 and the upper space (hereinafter referred to as "upper space 634a") inside the cylinder 632c may be connected to each other above the top dead center of the piston 611. Therefore, during the reciprocating motion of the piston 611, the volume of the upper space 634a and the suction space 634 may change by the stroke volume.

When the piston 611 moves from the top dead center to the bottom dead center (hereinafter referred to as "downward stroke"), the fluid in the suction space 634 may move to the upper space 634a (see FIG. 16). Therefore, the pressure of the suction space 634 may decrease during the downward stroke. At this time, the first check valve 621 may open the inlet of the suction space 634. Therefore, the additive Ag of the storage space 501 can flow into the suction space 634 through the first supply passage 631b.

At this time, the second check valve 622 may maintain the state of blocking the outlet of the suction space 634 due to the pressure drop in the suction space 634. Therefore, the pressure inside the additive transfer pipe 640 does not change during the downward stroke, and the third check valve 623 can maintain the state of blocking the outlet of the additive transfer pipe 640. Therefore, during the downward stroke, the additive supply part 600 cannot discharge the additive Ag into the inside of the tub.

Meanwhile, when the piston 611 moves from the bottom dead center to the top dead center (hereinafter referred to as "upward stroke"), the fluid in the upper space 634a can move into the suction space 634 (see FIG. 17). Therefore, the pressure of the suction space 634 may increase during the upward stroke. At this time, the first check valve 621 may maintain the inlet of the suction space 634 blocked due to the increase in the pressure of the suction space 634.

At this time, the second check valve 622 may open the outlet of the suction space 634. Therefore, the additive Ag in the suction space 634 can flow into the connecting space 635. Therefore, as the pressure inside the additive transfer pipe 640 increases during the upward stroke, the third check valve 623 can open the outlet of the additive transfer pipe 640. Therefore, the additive supply part 600 may discharge the additive Ag into the inside of the tub during the upward stroke.

The suction space 634 may be disposed below the storage space 501. Therefore, all of the additive Ag in the storage space 501 can flow into the suction space 634 through the inlet of the suction space 634 by gravity. The connecting space 635 may be disposed below the suction space 634. Therefore, all of the additive Ag in the suction space 634 can flow into the connecting space 635 through the outlet of the suction space 634 by gravity. The additive transfer pipe 640 may be disposed below the connecting space 635. Therefore, all of the additive Ag in the connecting space 635 can move toward the outlet of the additive transferpipe 640 by gravity. Therefore, all of the additiveAg stored in the storage space 501 can be discharged into the tub.

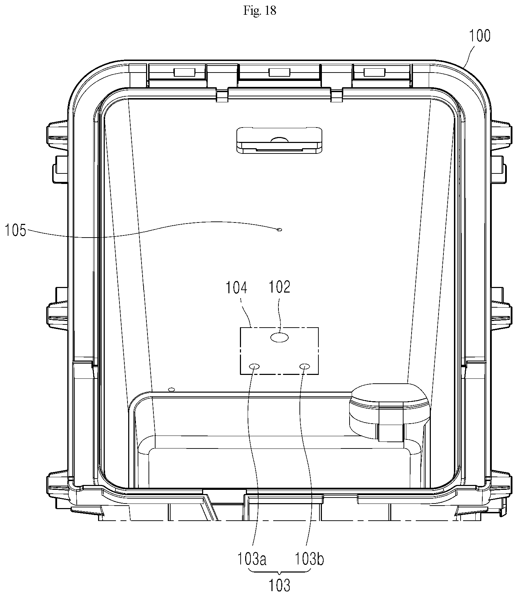

FIG. 18 is a view of a washing space inside the tub 100 of FIG. 6 viewed from a front upper side.

The washing water supply part 90 may supply water to a specific region (hereinafter, referred to as a "first region 104") on the inner wall of the tub 100. The additive inlet 103 may be provided in the first region 104 of the innerwall of the tub 100. The first region 104 may be located between the first additive supply part 600a and the second additive supply part 600b with respect to the X-axis.

The additive transfer pipe 640 may include a first additive transfer pipe 641 and a second additive transfer pipe 642 (see FIG. 9).

The first additive transfer pipe 641 may connect the second additive supply pipe 632a of the first additive supply part 600a to the tub 100. The first additive transfer pipe 641 may be connected to the tub 100 below the connecting space. Therefore, the first additive transfer pipe 641 can supply the first additive Ag1 to the inside of the tub 100 below the connecting space. Therefore, almost all of the additive Ag discharged from the additive pump 610 of the first additive supply part 600a can move to the inside of the tub 100 by gravity.

The first additive transfer pipe 641 may be connected to the first additive inlet 103a in the inner wall of the tub 100. That is, the first additive supply part 600a may supply the first additive Ag1 to the inside of the tub 100 through the first additive inlet 103a The first additive inlet 103a may be provided in the first region 104 of the inner wall of the tub 100.

The second additive transfer pipe 642 may connect the second additive supply pipe 632a of the second additive supply part 600b to the tub 100. The second additive transfer pipe 642 may be connected to the tub 100 below the connecting space. Therefore, the second additive transfer pipe 642 can supply the second additive Ag2 to the inside of the tub 100 below the connecting space. Therefore, almost all of the additive Ag discharged from the additive pump 610 of the second additive supply part 600b can move to the inside of the tub 100 by gravity.

The second additive transfer pipe 642 may be connected to the second additive inlet 103a on the inner wall of the tub 100. That is, the second additive supply part 600b may supply the second additive Ag2 into the tub 100 through the second additive inlet 103b. The second additive inlet 103b may be provided in the first region 104 of the inner wall of the tub 100.

As described above, the first region 104 may be located between the first additive supply part 600a and the second additive supply part 600b with respect to the X-axis. The first additive Ag1 may be a detergent. The second additive Ag2 may be a rinse.

When washing the cup C, less rinse than detergent (about 0.2 times the amount of the detergent) may be required The second additive transfer pipe 642 may have a shorter length than the first additive transfer pipe 641. Therefore, even when the second additive Ag2 is supplied in a smaller amount than the first additive Ag1, almost all of the second additive Ag2 can move into the tub 100 without remaining inside the second additive transfer pipe 642.

As described above, the water in the water reservoir 50 may be supplied into the tub 100 through the washing water supply part 90 (see FIG. 7). The washing water supply part 90 may include a washing water supply pipe 91 and an opening/closing valve 92. The controller 40 may control the opening/closing valve 92.

The washing water supply pipe 91 may be connected to a washing water inlet 102 on the inner wall of the tub 100. The washing water inlet 102 may be located above the additive inlet 103 within the first region 104. The water discharged from the washing water inlet 102 may fall toward the additive inlet 103 by gravity. Accordingly, the washing water supply part 90 can supply water to the first region 104. Therefore, the additive Ag discharged into the tub 100 from the additive inlet 103 can be mixed with the water discharged from the washing water inlet 102 and move downward together with the water.

The first additive inlet 103a and the second additive inlet 103b may be spaced apart from each other in the horizontal direction within the firstregion 104. With respect to the X-axis, the first additive inlet 103a and the second additive inlet 103b may be spacedapart from the washing water inlet 102 at equal intervals in the horizontal direction

Therefore, the first additive Ag 1 discharged from the first additive inlet 103a into the tub 100 can be mixed with the water discharged from the washing water inlet 102. In addition, the second additive Ag2 discharged from the second additive inlet 103b into the tub 100 may be mixed with the water discharged from the washing water inlet 102.

Although specific embodiments of the present disclosure have been described and illustrated above, it is evident to a person ordinarily skilled in the art that the present disclosure is not limited to the described embodiments, and various changes and modifications can be made without departing from the technical idea and scope of the present disclosure. Accordingly, such modifications or variations should not be understood individually from the technical spirit and viewpoint of the present disclosure, and the modifications and variations should be deemed to fall within the scope of the claims of the present disclosure.

## Claims

1. A cup washer (1000) that washes a cup (C) by spraying water into a tub (100), the cup washer (1000) comprising:
an additive storage part (500) configured to store an additive in a storage space (501); and
an additive supply part (600) configured to supply the additive into the tub (100),
wherein the additive supply part (600) comprises:
a rotary plate (612) rotated by an additive motor (613) and providing an eccentric shaft (612b), and
a piston (611) connected to the eccentric shaft (612b) by a connecting rod (614) and configured to reciprocate within a cylinder (632c) to suction and discharge the additive from the additive storage part (500).

2. The cup washer (1000) of claim 1, wherein the additive supply part (600) comprises:
a magnetic force member (615) coupled to the rotary plate (612), and
a magnetic force detector (616) provided on one side of a rotation path of the magnetic force member (615) to detect the rotation of the magnetic force member (615), and
wherein an input amount of the additive is controlled by a signal from the magnetic force detector (616).

3. The cup washer (1000) of claim 2, wherein the magnetic force member (615) is a permanent magnet and configured to form a maximum magnetic flux in the radial direction of the rotary plate (612) on one surface of the rotary plate (612), and
wherein the magnetic force detector (616) is a Hall sensor and configured to detect a magnetic field of the magnetic force member (615).

4. The cup washer (1000) of claim 1, wherein the additive supply part (600) comprises:
a pump housing (630) forming a suction space (634) where the additive from the additive storage part (500) is suctioned during reciprocating motion of the piston (611); and
an additive transfer pipe (640) connecting the pump housing (630) and the tub (100) so that the additive discharged from the suction space (634) moves to the tub (100).

5. The cup washer (1000) of claim 4, wherein the suction space (634) is disposed below the storage space (501) and above the additive transfer pipe (640).

6. The cup washer (1000) of claim 5, wherein the piston (611) is configured to reciprocate up and down within the cylinder (632c), and
wherein the suction space (634) and an upper space (634a) inside the cylinder (632c) are connected to each other above a top dead center of the piston (611).

7. The cup washer (1000) of claim 4, wherein the additive supply part (600) comprises:
a first check valve (621) configured to open an inlet of the suction space (634) by the pressure drop in the suction space (634) during the reciprocating motion of the piston (611); and
a second check valve (622) disposed below the first check valve (621) and configured to open an outlet of the suction space (634) by a pressure increase in the suction space (634) during the reciprocating motion of the piston (611).

8. The cup washer (1000) of claim 7, wherein the first check valve (621) comprises:
an inlet plug (621a) provided in the suction space (634);
an inlet elastic member (621b) provided in the suction space (634) and configured to push the inlet plug (621a) to the inlet of the suction space (634); and
an inlet guide bar (621c) extending from the inlet plug (621a) and inserted into the inlet of the suction space (634).

9. The cup washer (1000) of claim 7, wherein the pump housing (630) forms a connecting space (635) connecting the outlet of the suction space (634) and an inlet of the additive transfer pipe (640), and
wherein the second check valve (622) comprises:
an outlet plug (622a) provided in the connecting space (635);
an outlet elastic member (622b) provided in the connecting space (635) and configured to push the outlet plug (622a) to the outlet of the suction space (634); and
an outlet guide bar (622c) extending from the outlet plug (622a) and inserted into the outlet of the suction space (634).

10. The cup washer (1000) of claim 9, wherein the connecting space (635) is disposed below the suction space (634) and above the additive transfer pipe (640).

11. The cup washer (1000) of claim 9, wherein the pump housing (630) comprises an additive supply pipe (631a,632a) through which the additive discharged from the connecting space (635) moves, and
wherein the inlet of the additive transfer pipe (640) is connected while surrounding an outer surface of the additive supply pipe (631a,632a).

12. The cup washer (1000) of claim 4, wherein the additive supply part (600) comprises:
a third check valve (623) configured to open an outlet of the additive transfer pipe (640) due to an increase in pressure inside the additive transfer pipe (640) during the reciprocating motion of the piston (611).

13. The cup washer (1000) of claim 1, wherein the additive supply part (600) is configured to supply the additive into the tub (100) through an additive inlet (103) provided in a first region (104) of an inner wall of the tub (100),
wherein the cup washer (1000) comprises a washing water supply part (90) configured to discharge water from the washing water inlet (102) on the inner wall of the tub (100) to supply the water to the first region (104), and
wherein the washing water inlet (102) is located above the additive inlet (103) within the first region (104).

14. The cup washer (1000) of claim 1, wherein the additive storage part (500) comprises:
a first additive storage part (510) configured to store a first additive in a first storage space (511); and
a second additive storage part (520) configured to store a second additive in a second storage space (521),
wherein the additive supply part (600) comprises:
a first additive supply part (600a) configured to supply the first additive into the tub (100), and
a second additive supply part (600b) configured to supply the second additive into the tub (100), and
wherein the cup washer (1000) comprises a controller (40) configured to individually control the first additive supply part (600a) and the second additive supply part (600b).

15. The cup washer (1000) of claim 14, wherein the first additive supply part (600a) is configured to supply the additive into the tub (100) through a first additive inlet (103a) provided in a first region (104) of an inner wall of the tub (100), and
wherein the second additive supply part (600b) is configured to supply the additive into the tub (100) through a second additive inlet (103b) provided in the first region (104).

## Amended claims

### Amended claims in accordance with Rule 137(2) EPC.

1. A cup washer (1000) that washes a cup (C) by spraying water into a tub (100), the cup washer (1000) comprising:
an additive storage part (500) configured to store an additive in a storage space (501); and
an additive supply part (600) configured to supply the additive into the tub (100),
wherein the additive supply part (600) comprises:
a rotary plate (612) rotated by an additive motor (613) and providing an eccentric shaft (612b); and
a piston (611) connected to the eccentric shaft (612b) by a connecting rod (614) and configured to reciprocate within a cylinder (632c) to suction and discharge the additive from the additive storage part (500),
wherein the additive supply part (600) comprises:
a magnetic force member (615) coupled to the rotary plate (612), and
a magnetic force detector (616) provided on one side of a rotation path of the magnetic force member (615) to detect the rotation of the magnetic force member (615), and
wherein an input amount of the additive is controlled by a signal from the magnetic force detector (616).

2. The cup washer (1000) of claim 1, wherein the magnetic force member (615) is a permanent magnet and configured to form a maximum magnetic flux in the radial direction of the rotary plate (612) on one surface of the rotary plate (612), and
wherein the magnetic force detector (616) is a Hall sensor and configured to detect a magnetic field of the magnetic force member (615).

3. The cup washer (1000) of claim 1, wherein the additive supply part (600) comprises:
a pump housing (630) forming a suction space (634) where the additive from the additive storage part (500) is suctioned during reciprocating motion of the piston (611); and
an additive transfer pipe (640) connecting the pump housing (630) and the tub (100) so that the additive discharged from the suction space (634) moves to the tub (100).

4. The cup washer (1000) of claim 3, wherein the suction space (634) is disposed below the storage space (501) and above the additive transfer pipe (640).

5. The cup washer (1000) of claim 4, wherein the piston (611) is configured to reciprocate up and down within the cylinder (632c), and
wherein the suction space (634) and an upper space (634a) inside the cylinder (632c) are connected to each other above a top dead center of the piston (611).

6. The cup washer (1000) of claim 3, wherein the additive supply part (600) comprises:
a first check valve (621) configured to open an inlet of the suction space (634) by the pressure drop in the suction space (634) during the reciprocating motion of the piston (611); and
a second check valve (622) disposed below the first check valve (621) and configured to open an outlet of the suction space (634) by a pressure increase in the suction space (634) during the reciprocating motion of the piston (611).

7. The cup washer (1000) of claim 6, wherein the first check valve (621) comprises:
an inlet plug (621a) provided in the suction space (634);
an inlet elastic member (621b) provided in the suction space (634) and configured to push the inlet plug (621a) to the inlet of the suction space (634); and
an inlet guide bar (621c) extending from the inlet plug (621a) and inserted into the inlet of the suction space (634).

8. The cup washer (1000) of claim 6, wherein the pump housing (630) forms a connecting space (635) connecting the outlet of the suction space (634) and an inlet of the additive transfer pipe (640), and
wherein the second check valve (622) comprises:
an outlet plug (622a) provided in the connecting space (635);
an outlet elastic member (622b) provided in the connecting space (635) and configured to push the outlet plug (622a) to the outlet of the suction space (634); and
an outlet guide bar (622c) extending from the outlet plug (622a) and inserted into the outlet of the suction space (634).

9. The cup washer (1000) of claim 8, wherein the connecting space (635) is disposed below the suction space (634) and above the additive transfer pipe (640).

10. The cup washer (1000) of claim 8, wherein the pump housing (630) comprises an additive supply pipe (631a,632a) through which the additive discharged from the connecting space (635) moves, and
wherein the inlet of the additive transfer pipe (640) is connected while surrounding an outer surface of the additive supply pipe (631a,632a).

11. The cup washer (1000) of claim 3, wherein the additive supply part (600) comprises:
a third check valve (623) configured to open an outlet of the additive transfer pipe (640) due to an increase in pressure inside the additive transfer pipe (640) during the reciprocating motion of the piston (611).

12. The cup washer (1000) of claim 1, wherein the additive supply part (600) is configured to supply the additive into the tub (100) through an additive inlet (103) provided in a first region (104) of an inner wall of the tub (100),
wherein the cup washer (1000) comprises a washing water supply part (90) configured to discharge water from the washing water inlet (102) on the inner wall of the tub (100) to supply the water to the first region (104), and
wherein the washing water inlet (102) is located above the additive inlet (103) within the first region (104).

13. The cup washer (1000) of claim 1, wherein the additive storage part (500) comprises:
a first additive storage part (510) configured to store a first additive in a first storage space (511); and
a second additive storage part (520) configured to store a second additive in a second storage space (521),
wherein the additive supply part (600) comprises:
a first additive supply part (600a) configured to supply the first additive into the tub (100), and
a second additive supply part (600b) configured to supply the second additive into the tub (100), and
wherein the cup washer (1000) comprises a controller (40) configured to individually control the first additive supply part (600a) and the second additive supply part (600b).

14. The cup washer (1000) of claim 13, wherein the first additive supply part (600a) is configured to supply the additive into the tub (100) through a first additive inlet (103a) provided in a first region (104) of an inner wall of the tub (100), and
wherein the second additive supply part (600b) is configured to supply the additive into the tub (100) through a second additive inlet (103b) provided in the first region (104).
